# EUROPEAN PATENT APPLICATION

(11) **EP 4 727 180 A1**
(43) Date of publication of application: **15.04.2026**
(21) Application number: 24853556.9
(22) Date of filing: 30.07.2024
(51) Int. Cl.: H04W 8/14

(54) **COMMUNICATION METHOD, APPARATUS, AND SYSTEM**

(30) Priority: 11.08.2023 CN 202311017171
(71) Applicant: Huawei Technologies Co., Ltd., Shenzhen, Guangdong 518129 (CN)
(72) Inventor: JING, Hao, Shenzhen, Guangdong 518129 (CN); SUN, Xiaoji, Shenzhen, Guangdong 518129 (CN); LI, Hua, Shenzhen, Guangdong 518129 (CN); QI, Caixia, Shenzhen, Guangdong 518129 (CN)
(74) Representative: Gill Jennings & Every LLP
(86) International application number: PCT/CN2024/108390
(87) International publication number: WO 2025/036144

(57) **Abstract**

This application provides a communication method, apparatus, and system, and relates to the field of communication technologies. The method includes: sending request information to a network device, where the request information indicates to perform a re-authorization procedure for a terminal device, and the terminal device accesses a core network by using a non-3GPP access technology; receiving first indication information and/or second indication information from the network device, where the first indication information indicates a core network type that supports access of the terminal device, and the second indication information indicates whether data interworking between different types of core networks needs to be performed; and selecting a network element device based on the first indication information and/or the second indication information, where the network element device is configured to establish a connection to the terminal device. According to the method, the first indication information and/or the second indication information can be obtained, to help correctly select the network element device configured to establish the connection to the terminal device.

## Description

This application claims priority to Chinese Patent Application No. 202311017171.0, filed with the China National Intellectual Property Administration on August 11, 2023 and entitled "COMMUNICATION METHOD, APPARATUS, AND SYSTEM", which is incorporated herein by reference in its entirety.

### TECHNICAL FIELD

This application relates to the field of communication technologies, and specifically, to a communication method, apparatus, and system.

### BACKGROUND

To cope with challenges of wireless broadband technologies and maintain a leading advantage of a 3rd generation partnership project (3rd generation partnership project, 3GPP) network, the 3GPP formulates a long term evolution (long term evolution, LTE) plan for a mobile communication network, and defines a new mobile communication network architecture. The architecture is flatter than that of a 2nd generation (2nd Generation, 2G) mobile communication technology network and a 3rd generation (3rd Generation, 3G) mobile communication technology network. An evolved packet core network (evolved packet core network, EPC) belonging to the new mobile communication network architecture not only supports a 3GPP access technology, but also supports a non-3GPP (non-3GPP) access technology, for example, a code division multiple access (code division multiple access, CDMA) 2000 technology, a worldwide interoperability for microwave access (worldwide interoperability for microwave access, WiMAX) technology, and a wireless local area network (wireless local area network, WLAN) technology.

With development of wireless broadband technologies, a network side may communicate with a terminal device based on an EPC, or may communicate with a terminal device based on a 5G core network (5G core network, 5GC). In this way, when user subscription data corresponding to the terminal device changes, a mobility access restriction condition for the terminal device may be affected. The user subscription data includes information indicating the mobility access restriction condition. However, it can be learned from a current communication mechanism that, in a re-authorization procedure for the terminal device, a packet data gateway (evolved packet data gateway, ePDG) may select a network element device that does not meet the mobility access restriction condition to establish a session with the terminal device. Consequently, the terminal device fails to establish the session.

Therefore, how to avoid a case in which the terminal device fails to establish the session because the ePDG selects, during execution of the re-authorization procedure for the terminal device, the network element device that does not meet the mobility access restriction condition to establish the session with the terminal device is a problem to be resolved.

### SUMMARY

This application provides a communication method, apparatus, and system, to avoid a case in which a terminal device fails to establish a session because an ePDG selects a network element device that does not meet a mobility access restriction condition to establish a connection to the terminal device.

According to a first aspect, a communication method is provided. The method includes: sending request information to a network device, where the request information indicates to perform a re-authorization procedure for a terminal device, and the terminal device accesses a core network by using a non-3GPP access technology; receiving first indication information and/or second indication information from the network device, where the first indication information indicates a core network type that supports access of the terminal device, and the second indication information indicates whether data interworking between different types of core networks needs to be performed; and selecting a network element device based on the first indication information and/or the second indication information, where the network element device is configured to establish a connection to the terminal device.

For example, the communication method may be performed by an ePDG, or may be performed by a related network device that can replace a function of an ePDG. In addition, the network device in the foregoing communication method may be an authentication, authorization, and accounting (authentication, authorization, and accounting, AAA) server.

It should be understood that the terminal device may be user equipment, and the user equipment is configured to: establish a connection to a network side and accept a communication service provided by the network side.

For example, the first indication information may be core network type restriction (core network type restriction) information, and the core network type restriction information is also referred to as core network restriction (core network restriction) information, for example, may be an enumerated value. The enumerated value may include: an EPC, representing that the terminal device is supported in accessing the EPC; a 5GC, representing that the terminal device is supported in accessing the 5GC; and an EPC & a 5GC, representing that the terminal device is supported in accessing both the EPC and the 5GC, where "support both" means that the terminal device is supported in accessing the EPC and the terminal device is also supported in accessing the 5GC.

For example, the core network type restriction information may be carried by an authentication and authorization answer (AA-answer, AAA) command, and the AAA command may include an information element for the core network type restriction information. If data subscribed to by the terminal device includes the core network type restriction information, authorization answer information is to include an information element, and the information element may be an indicator bit that indicates a restriction on a type of a core network that the terminal device accesses.

For example, the core network type restriction information may be represented by data of an unsigned data type, and includes a mask bit. The mask bit indicates a core network type that is not allowed to be used by a terminal device as specified. For example, "0" and "1" may represent a meaning of the core network type restriction information. "0" indicates that the mask bit is discarded, to indicate that the type of the core network that the terminal device can access is not restricted. "1" indicates that the terminal device is not allowed to access the 5GC.

For example, the second indication information may be an interworking indicator (interworking-SGS-indicator). The interworking indicator may be, for example, an enumerated type, representing whether data interworking between an EPC and a 5GC is subscribed to, and a Boolean value represents a meaning of the interworking indicator. "0" indicates that the data interworking is not subscribed to; "1" indicates that the data interworking is subscribed to. When the interworking indicator does not exist on the network side, a value corresponding to a reserved bit for the interworking indicator is "0", indicating that the data interworking cannot be subscribed to.

For example, the interworking indicator may alternatively be carried by the AAA command.

For example, the first indication information and the second indication information may alternatively be represented only by the core network type restriction information. The core network type restriction information includes a SGC bit and a data interworking indicator bit, and does not restrict accessibility of the EPC. The SGC bit indicates whether the terminal device is allowed to access the SGC, and the data interworking indicator bit indicates whether data interworking between different types of core networks needs to be performed. For example, the network device is the ePDG. For a terminal device that supports an N1 mode, whose user subscription data does not restrict a type of a core network that the terminal device accesses, and that is connected to the 5GC, the ePDG may select a co-located network element including a session management function (session management function, SMF) network element and a packet data network gateway control plane function (PDN gateway control plane function, PGW-C) for a public data network (public data network, PDN) connection moving to the 5GC. The N1 mode supported by the UE is an operation mode in 5G new radio (5G new radio, 5GNR), and is also referred to as a non-standalone mode (Non-Standalone Mode). In addition, if the core network type restriction information is changed, due to a change of non-3GPP user subscription data, to forbidding the terminal device to connect to a currently accessed core network, the ePDG may trigger a detach procedure, for example, disconnect from a currently connected network element device.

For example, the first indication information and the second indication information may be carried by one piece of answer information sent by the network device, or may be carried by two pieces of answer information sent by the network device. The answer information may be the AAA command.

It should be understood that, both the core network type restriction information and the interworking indicator are information that represents a mobility access restriction condition. In an existing re-authorization procedure that is for a terminal device and that is triggered on a network side by a change of user subscription data of the terminal device, the ePDG cannot obtain change information of the core network type restriction information and/or the interworking indicator. However, according to the method in the first aspect, the ePDG can receive the first indication information and/or the second indication information from the AAA server, and the first indication information and the second indication information can respectively indicate the core network type restriction information and the interworking indicator, so that the AAA server can determine whether the core network type restriction information and/or the interworking indicator also change/changes after the user subscription data changes, the ePDG can select, for connection, a network element device that meets a restriction condition with changed core network type restriction information and/or a changed interworking indicator, and the network element device can establish a connection to the terminal device, to avoid a case in which the ePDG selects a network element device that does not meet the mobility access restriction condition, to establish a session with the terminal device.

According to the foregoing technical solution, after the core network type restriction information and/or the interworking indicator in the user subscription data corresponding to the terminal device change/changes, the ePDG can obtain, from explicit or implicit information, changed core network type restriction information and/or a changed interworking indicator in user subscription data, to avoid a case in which the network side cannot update a change of the information when the core network type restriction information and/or the interworking indicator change/changes, so as to avoid communication exception caused by a case in which the ePDG selects an incorrect network element device to establish a connection to the terminal device.

With reference to the first aspect, in some implementations of the first aspect, when the core network type indicated by the first indication information is accessing an evolved packet core network EPC, a packet data network gateway (packet data network gateway, PGW) network element is selected; when the core network type indicated by the first indication information is a 5GC, an SMF network element is selected; when the core network type indicated by the first indication information is an EPC and a 5GC, an EPC network element, a PGW network element, or a co-located network element is selected; when the second indication information indicates that the data interworking between different types of core networks needs to be performed, a co-located network element is selected; when the core network type indicated by the first indication information is a 5GC, and the second indication information indicates that the data interworking between different types of core networks needs to be performed, a co-located network element including an SMF network element and a PGW-C is selected; when the core network type indicated by the first indication information is an EPC and a 5GC, and the second indication information indicates that the data interworking between different types of core networks needs to be performed, a co-located network element is selected; or when the core network type indicated by the first indication information is an EPC and a 5GC, and the second indication information indicates that the data interworking between different types of core networks does not need to be performed, an SMF network element, a PGW network element, or a co-located network element is selected, where the co-located network element is a network element in which the SMF network element and a PGW-C network element are co-located.

According to the foregoing technical solution, the ePDG selects the corresponding network element device based on the foregoing selection logic, so that the selected network element device meets a restriction condition indicated by the first indication information and/or the second indication information, to ensure that the terminal device can access a corresponding core network.

With reference to the first aspect, in some implementations of the first aspect, a deregistration procedure for the terminal device is triggered, or a deactivation procedure for a session corresponding to the terminal device is triggered.

The deregistration procedure is a procedure of deleting subscription user registration management (registration management, RM) context and releasing the session corresponding to the terminal device. The deactivation procedure is a procedure of releasing the session corresponding to the terminal device. It can be learned that the foregoing deregistration procedure includes the foregoing deactivation procedure, in other words, the deactivation procedure is also performed in the deregistration procedure. Whether the deregistration procedure for the terminal device needs to be performed may be determined based on storage space and/or current workload of the network side. If the storage space of the network side is abundant and/or the current workload is large, only the deactivation procedure for the terminal device may be triggered.

For example, when the ePDG determines that the currently connected network element device does not meet the restriction condition indicated by the first indication information and/or the second indication information, for example, when the core network type indicated by the first indication information is the EPC, the ePDG determines that the currently connected network element device is the SMF network element, and it indicates that the network element device currently connected to the ePDG does not meet the first indication information, the ePDG is to establish a connection to the PGW network element; or when the second indication information indicates that the data interworking between different types of core networks needs to be performed, the ePDG determines that the currently connected network element device is only the SMF network element or the PGW network element, and it indicates that the network element device currently connected to the ePDG does not meet the second indication information, the ePDG is to establish a connection to the foregoing co-located network element. In these scenarios, the ePDG may first perform the deregistration procedure for a terminal device corresponding to the network element device, is also disconnected from the network element device in the deregistration procedure, and then selects a new network element device based on the first indication information and/or the second indication information to establish a connection.

For example, in some possible embodiments, when the ePDG determines that the currently connected network element device does not meet the restriction condition indicated by the first indication information and/or the second indication information, the ePDG may first select a new network element device based on the first indication information and/or the second indication information, switch to and establish a connection to the new network element device, and then perform the deregistration procedure for the terminal device.

According to the foregoing technical solution, after it is determined that the core network type restriction information and/or the interworking indicator in the user subscription data change/changes, a corresponding deregistration or deactivation operation is performed for the terminal device, and a storage resource and a communication resource on the network side are released, to help improve utilization of the storage resource and the communication resource on the network side.

With reference to the first aspect, in some implementations of the first aspect, notification information is sent to the terminal device, where the notification information indicates that the terminal device is capable of accessing a core network indicated by the first indication information and/or a core network indicated by the second indication information.

For example, the foregoing operation may be performed in a process of updating the user subscription data, or may be performed in the foregoing process of deregistration or deactivation.

For example, the notification information may be a cause value based on an internet key exchange version 2 (internet key exchange version 2, IKEv2) protocol, and the cause value may indicate the core network type restriction information and/or the interworking indicator.

According to the foregoing technical solution, the terminal device can determine whether the core network type restriction information and/or the interworking identifier in the user subscription data change/changes, and can actively adjust a corresponding network access manner, to ensure that a communication connection requested by the terminal device from the network side is not rejected by the network side.

According to a second aspect, a communication method is provided. The method includes: sending request information to a network device, where the request information indicates to perform a re-authorization procedure for a terminal device; receiving indication information from the network device, where the indication information indicates an access technology type that supports the terminal device in accessing a core network; and triggering a deregistration procedure for the terminal device when an access technology type used by the terminal device to access the core network does not belong to the access technology type indicated by the indication information.

For example, the communication method may be performed by an ePDG, or may be performed by a related network device that can replace a function of an ePDG.

For example, the indication information may be radio access type (radio access type, RAT) restriction information, or the indication information may be implicit information that can reflect RAT restriction information. For example, the RAT restriction information may include: allowing a terminal device to access a core network by using a non-3GPP access technology, allowing a terminal device to access a core network by using a 3GPP access technology, allowing a terminal device to access a core network by using a non-3GPP or 3GPP access technology, and forbidding a terminal device to access a core network by using a non-3GPP or 3GPP access technology.

According to the foregoing technical solution, after it is determined that the RAT restriction information in user subscription data changes, a corresponding deregistration operation is performed for the terminal device, and a storage resource on a network side is released, to help improve utilization of the storage resource on the network side.

With reference to the second aspect, in some implementations of the second aspect, notification information is sent to the terminal device, where the notification information indicates that the terminal device is capable of accessing the core network by using an access technology indicated by the indication information.

For example, the foregoing operation may be performed in a process of updating the user subscription data, or may be performed in the foregoing process of deregistration or deactivation.

For example, the notification information may be a cause value based on an IKEv2 protocol, and the cause value may indicate the RAT restriction information.

According to the foregoing technical solution, when the network side updates the RAT restriction information of the user subscription data, the terminal device can obtain updated RAT restriction information, to prevent the terminal device from repeatedly requesting to access the core network by using the forbidden non-3GPP access technology or 3GPP access technology.

According to a third aspect, a communication method is provided. The method includes: receiving request information from a network device, where the request information indicates to perform a re-authorization procedure for a terminal device, and the terminal device accesses a core network by using a non-3GPP access technology; and sending first indication information and/or second indication information to the network device, where the first indication information indicates a core network type that supports access of the terminal device, the second indication information indicates whether data interworking between different types of core networks needs to be performed, and the first indication information and/or the second indication information are/is a basis for the network device to select a network element device, where the network element device is configured to establish a connection to the terminal device.

For example, the method may be performed by an AAA server, or may be performed by a related network device that can replace a function of an AAA server.

For example, the AAA server may further obtain user subscription data of the terminal device based on the request information. The user subscription data includes core network type restriction information and/or an interworking identifier.

For example, the AAA server may obtain the user subscription data of the terminal device from a home subscriber server (home subscriber server/system, HSS) or a unified data management (unified data management, UDM) function network element.

It should be understood that, based on the example in the first aspect, it can be learned that the first indication information may be the core network type restriction information, and the second indication information may be the interworking indicator.

For example, the AAA server may determine an AAA command based on the obtained user subscription data, and include the core network type restriction information and/or the interworking indicator in the AAA command.

For example, the first indication information and the second indication information may be carried by one piece of answer information, or may be carried by two pieces of answer information.

According to the foregoing technical solution, the AAA server sends the first indication information and/or the second indication information to an ePDG, so that the ePDG can obtain changed core network type restriction information and/or a changed interworking indicator in user subscription data, to avoid a case in which a network side cannot update a change of information when the core network type restriction information and/or the interworking indicator change/changes, so as to avoid communication exception caused by a case in which the ePDG selects an incorrect network element device to establish a connection to the terminal device.

With reference to the third aspect, in some implementations of the third aspect, when the core network type indicated by the first indication information is an EPC, the network element device is a PGW network element; when the core network type indicated by the first indication information is a 5GC, the network element device is an SMF network element; when the core network type indicated by the first indication information is an EPC and a 5GC, the network element device is an EPC network element, a PGW network element, or a co-located network element; when the second indication information indicates that the data interworking between different types of core networks needs to be performed, the network element device is a co-located network element; when the core network type indicated by the first indication information is a 5GC, and the second indication information indicates that the data interworking between different types of core networks needs to be performed, the network element device is a co-located network element including an SMF network element and a PGW-C; when the core network type indicated by the first indication information is an EPC and a 5GC, and the second indication information indicates that the data interworking between different types of core networks needs to be performed, the network element device is a co-located network element; or when the core network type indicated by the first indication information is an EPC and a 5GC, and the second indication information indicates that the data interworking between different types of core networks does not need to be performed, the network element device is an SMF network element, a PGW network element, or a co-located network element, where the co-located network element is a network element in which the SMF network element and a PGW-C network element are co-located.

According to a fourth aspect, a communication method is provided. The method includes: receiving request information sent by a network device, where the request information indicates to perform a re-authorization procedure for a terminal device; and sending indication information to the network device, where the indication information indicates an access technology type that is supported by the terminal device, and the indication information is a basis for the network device to determine whether to trigger a deregistration procedure for the terminal device.

For example, the method may be performed by an AAA server, or may be performed by a related network device that can replace a function of an AAA server.

According to the foregoing technical solution, the AAA server sends the indication information to an ePDG, so that the ePDG can determine whether RAT restriction information also changes after user subscription data changes, and determine, based on this, whether a corresponding deregistration operation needs to be performed for the terminal device to release a storage resource on a network side, to help improve utilization of the storage resource on the network side.

According to a fifth aspect, a communication method is provided. The method includes: receiving notification information from a network device, where the notification information indicates a terminal device to access a core network indicated by first indication information and/or a core network indicated by second indication information, the first indication information indicates a core network type that supports access of the terminal device, and the second indication information indicates whether data interworking between different types of core networks needs to be performed; and accessing, based on the notification information, the core network indicated by the first indication information and/or the core network indicated by the second indication information.

For example, the method may be performed by the foregoing terminal device.

According to the foregoing technical solution, the terminal device can determine, based on the notification information, whether core network type restriction information and/or an interworking identifier in user subscription data change/changes, and can actively adjust a corresponding network access manner, to ensure that a communication connection requested by the terminal device from a network side is not rejected by the network side.

According to a sixth aspect, a communication method is provided. The method includes: receiving notification information from a network device, where the notification information indicates a terminal device to access a core network by using an access technology indicated by indication information, and the indication information indicates an access technology type that supports the terminal device in accessing the core network; and accessing the core network based on the notification information by using the access technology indicated by the indication information.

For example, the method may be performed by the foregoing terminal device.

According to the foregoing technical solution, the terminal device can determine, based on the foregoing notification information, whether RAT restriction information in user subscription data changes, to actively adjust a corresponding network access manner, so as to prevent the terminal device from repeatedly requesting to access the core network by using a forbidden access technology.

According to a seventh aspect, a communication apparatus is provided. The apparatus includes: a sending unit, configured to send request information to a network device, where the request information indicates to perform a re-authorization procedure for a terminal device, and the terminal device accesses a core network by using a non-3GPP access technology; a receiving unit, configured to receive first indication information and/or second indication information from the network device, where the first indication information indicates a core network type that supports access of the terminal device, and the second indication information indicates whether data interworking between different types of core networks needs to be performed; and an operation unit, configured to select a network element device based on the first indication information and/or the second indication information, where the network element device is configured to establish a connection to the terminal device.

With reference to the seventh aspect, in some implementations of the seventh aspect, the operation unit is specifically configured to: when the core network type indicated by the first indication information is an EPC, select a PGW network element; when the core network type indicated by the first indication information is a 5GC, select an SMF network element; when the core network type indicated by the first indication information is an EPC and a 5GC, select an EPC network element, a PGW network element, or a co-located network element; when the second indication information indicates that the data interworking between different types of core networks needs to be performed, select a co-located network element; when the core network type indicated by the first indication information is a 5GC, and the second indication information indicates that the data interworking between different types of core networks needs to be performed, select a co-located network element including an SMF network element and a PGW-C; when the core network type indicated by the first indication information is an EPC and a 5GC, and the second indication information indicates that the data interworking between different types of core networks needs to be performed, select a co-located network element; or when the core network type indicated by the first indication information is an EPC and a 5GC, and the second indication information indicates that the data interworking between different types of core networks does not need to be performed, select an SMF network element, a PGW network element, or a co-located network element, where the co-located network element is a network element in which the SMF network element and a PGW-C network element are co-located.

With reference to the seventh aspect, in some implementations of the seventh aspect, the operation unit is further configured to: trigger a deregistration procedure for the terminal device, or trigger a deactivation procedure for a session corresponding to the terminal device.

With reference to the seventh aspect, in some implementations of the seventh aspect, the sending unit is further configured to send notification information to the terminal device, where the notification information indicates the terminal device to access a core network indicated by the first indication information and/or a core network indicated by the second indication information.

According to an eighth aspect, a communication apparatus is provided. The apparatus includes: a sending unit, configured to send request information to a network device, where the request information indicates to perform a re-authorization procedure for a terminal device; a receiving unit, configured to receive answer information from the network device, where the answer information includes indication information, and the indication information indicates an access technology type that supports the terminal device in accessing a core network; and an operation unit, configured to trigger a deregistration procedure for the terminal device when an access technology type used by the terminal device to access the core network does not belong to the access technology type indicated by the indication information.

With reference to the eighth aspect, in some implementations of the eighth aspect, the sending unit is further configured to send notification information to the terminal device, where the notification information indicates the terminal device to access the core network by using an access technology indicated by the indication information.

According to a ninth aspect, a communication apparatus is provided. The apparatus includes: a receiving unit, configured to receive request information from a network device, where the request information indicates to perform a re-authorization procedure for a terminal device, and the terminal device accesses a core network by using a non-3GPP access technology; and a sending unit, configured to send first indication information and/or second indication information to the network device, where the first indication information indicates a core network type that supports access of the terminal device, the second indication information indicates whether data interworking between different types of core networks needs to be performed, and the first indication information and/or the second indication information are/is a basis for the network device to select a network element device, where the network element device is configured to establish a connection to the terminal device.

With reference to the ninth aspect, in some implementations of the ninth aspect, when the core network type indicated by the first indication information is an EPC, the network element device is a PGW network element; when the core network type indicated by the first indication information is a 5GC, the network element device is an SMF network element; when the core network type indicated by the first indication information is an EPC and a 5GC, and the second indication information indicates that the data interworking between different types of core networks needs to be performed, the network element device is a co-located network element; when the core network type indicated by the first indication information is an EPC and a 5GC, the network element device is an EPC network element, a PGW network element, or a co-located network element; when the second indication information indicates that the data interworking between different types of core networks needs to be performed, the network element device is a co-located network element; when the core network type indicated by the first indication information is a 5GC, and the second indication information indicates that the data interworking between different types of core networks needs to be performed, the network element device is a co-located network element including an SMF network element and a PGW-C; or when the core network type indicated by the first indication information is an EPC and a 5GC, and the second indication information indicates that the data interworking between different types of core networks does not need to be performed, the network element device is an SMF network element, a PGW network element, or a co-located network element, where the co-located network element is a network element in which the SMF network element and a PGW-C network element are co-located.

According to a tenth aspect, a communication apparatus is provided. The apparatus includes: a receiving unit, configured to receive request information from a network device, where the request information indicates to perform a re-authorization procedure for a terminal device; and a sending unit, configured to send indication information to the network device, where the indication information indicates an access technology type that is supported by the terminal device, and the indication information is a basis for the network device to determine whether to trigger a deregistration procedure for the terminal device.

According to an eleventh aspect, a communication apparatus is provided. The apparatus includes: a receiving unit, configured to receive notification information from a network device, where the notification information indicates a terminal device to access a core network indicated by first indication information and/or a core network indicated by second indication information, the first indication information indicates a core network type that supports access of the terminal device, and the second indication information indicates whether data interworking between different types of core networks needs to be performed; and an operation unit, configured to access, based on the notification information, the core network indicated by the first indication information and/or the core network indicated by the second indication information.

According to a twelfth aspect, a communication apparatus is provided. The apparatus includes: a receiving unit, configured to receive notification information from a network device, where the notification information indicates a terminal device to access a core network by using an access technology indicated by indication information, and the indication information indicates an access technology type that supports the terminal device in accessing the core network; and an operation unit, configured to access the core network based on the notification information by using the access technology indicated by the indication information.

According to a thirteenth aspect, a communication apparatus is provided, including a processor and a memory. The processor is connected to the memory, the memory is configured to store program code, and the processor is configured to invoke the program code, to perform the method in any possible implementation of the method design in any one of the first aspect to the sixth aspect.

According to a fourteenth aspect, a chip is provided, including a processor. The processor is configured to perform the method in any possible implementation of the method design in any one of the first aspect to the fifth aspect.

According to a fifteenth aspect, a chip system is provided. The chip system is used in an electronic device. The chip system includes one or more interface circuits and one or more processors. The interface circuit and the processor are interconnected through a line. The interface circuit is configured to: echo a signal from a memory of the electronic device, and send the signal to the processor, where the signal includes computer instructions stored in the memory. When the processor executes the computer instructions, the electronic device performs the method in any possible implementation of the method design in any one of the first aspect to the sixth aspect.

According to a sixteenth aspect, a computer-readable storage medium is provided. The computer-readable storage medium stores a computer program or instructions. The computer program or the instructions are used to implement the method in any possible implementation of the method design in any one of the first aspect to the sixth aspect.

According to a seventeenth aspect, a computer program product is provided. When computer program code or instructions are executed on a computer, the computer is caused to perform the method in any possible implementation of the method design in any one of the first aspect to the sixth aspect.

According to an eighteenth aspect, a communication system is provided. The system includes a network device, configured to perform the method in any possible implementation of the method design in the first aspect or the second aspect; and a network device, configured to perform the method in any possible implementation of the method design in the third aspect or the fourth aspect.

It should be understood that, in embodiments of this application, the terminal device described in the first aspect and the following aspects may be a communication device such as a mobile phone or a vehicle-mounted terminal, or a chip (system) that may be disposed in the terminal device.

### BRIEF DESCRIPTION OF DRAWINGS

FIG. 1 is a diagram of a network architecture 100 applicable to an embodiment of this application;
FIG. 2 is a block diagram of a procedure of a communication method 200 according to an embodiment of this application;
FIG. 3 is a block diagram of a procedure of a communication method 300 according to an embodiment of this application;
FIG. 4 is a block diagram of a procedure of a communication method 400 according to an embodiment of this application;
FIG. 5 is a block diagram of a procedure of a communication method 500 according to an embodiment of this application;
FIG. 6 is a block diagram of a communication apparatus 600 according to an embodiment of this application;
FIG. 7 is a block diagram of a communication apparatus 700 according to an embodiment of this application; and
FIG. 8 is a block diagram of a communication apparatus 800 according to an embodiment of this application.

### DESCRIPTION OF EMBODIMENTS

The following describes the technical solutions of this application with reference to the accompanying drawings.

The technical solutions in embodiments of this application may be applied to various communication systems, for example, a global system for mobile communications (global system for mobile communications, GSM), a CDMA system, a wideband code division multiple access (wideband code division multiple access, WCDMA) system, a general packet radio service (general packet radio service, GPRS), an LTE system, an LTE frequency division duplex (frequency division duplex, FDD) system, LTE time division duplex (time division duplex, TDD), a universal mobile telecommunications system (universal mobile telecommunications system, UMTS), a WiMAX communication system, a 5^{th} generation (5^{th} generation, 5G) system or new radio (new radio, NR), and a future communication system.

To meet challenges of a wireless broadband technology and maintain a leading advantage of a 3GPP network, a 3GPP standard group formulates a next generation mobile communication network architecture (next generation system).

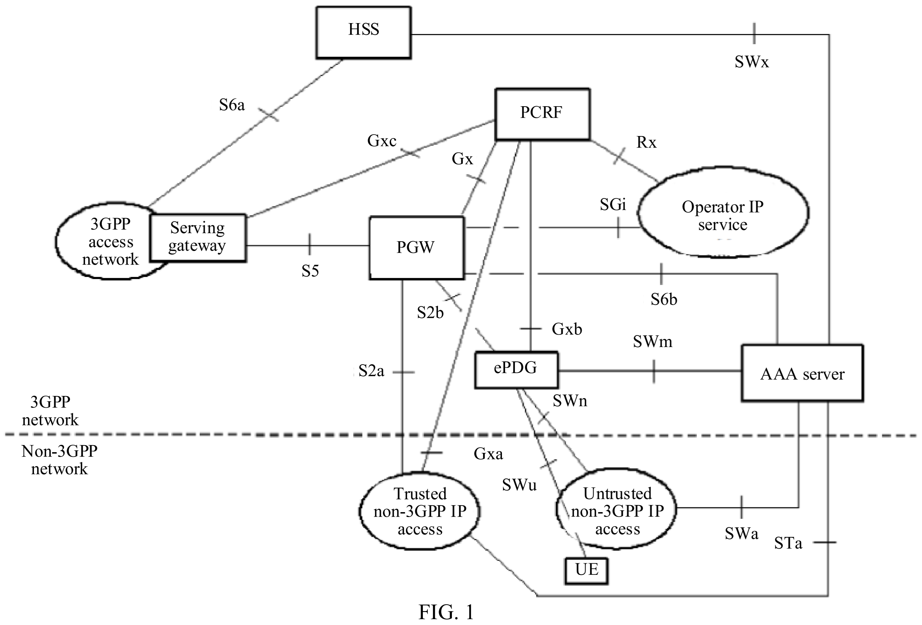

FIG. 1 is a diagram of a network architecture 100 applicable to an embodiment of this application.

The network architecture 100 is flatter than that of a 2G network and a 3G network, and only a packet switched domain is retained. An EPC belonging to the foregoing network architecture not only supports a 3GPP access technology, but also supports a non-3GPP access technology, for example, a CDMA2000 technology, a WiMAX technology, or a WLAN technology.

Refer to FIG. 1. A core network in the network architecture 100 may be accessed by using two access technologies. One is the 3GPP access technology, that is, the core network is accessed via a 3GPP network; and the other is the non-3GPP access technology, that is, the core network is accessed via a non-3GPP network.

The network architecture 100 may include the following devices.

User equipment (user equipment, UE) is also referred to as a terminal device, may access the core network by using the non-3GPP access technology, and receive a communication service provided by a network side.

An ePDG is configured to ensure that the UE for data transmission accesses the EPC by using the untrusted non-3GPP access technology. For example, in an initial attach scenario in which the UE accesses the core network by using the non-3GPP access technology, the ePDG may query and determine, based on a domain name system (domain name system, DNS), a PGW corresponding to an access point name (access point name, APN) in user subscription data; or the ePDG may directly obtain a PGW identifier that corresponds to an APN and that is from user subscription data, and select a corresponding session management network element to establish a PDN connection for the terminal device, so that the UE establishes a connection to a PGW, to provide a corresponding operator internet protocol (internet protocol, IP) service for the UE, such as an IP multimedia system (IP multimedia subsystem, IMS) and a packet switching service (packet switching service, PSS).

The PGW is also referred to as a PDN gateway (PDN Gateway), is a session management network element, and is configured to connect to the ePDG, to establish the connection to the UE, so that the UE can establish the PDN connection to the network side and receive the communication service provided by the network side. In addition, in the initial attach scenario in which the UE accesses the core network by using the non-3GPP access technology, in a process in which the PGW is connected to the ePDG, the PGW further needs to send the PGW identifier to an AAA server through an S6b interface between the PGW and the AAA server.

It should be understood that in different types of communication systems, descriptions of "establishing a connection" are different. For example, in a 4G network, establishing a session is referred to as establishing a PDN connection, and in a 5G network, establishing a connection is referred to as establishing a packet data unit (packet data unit, PDU) session. A meaning of "establishing a connection" in embodiments of this application is compatible with meanings of corresponding descriptions in the foregoing 4G network and 5G network.

The AAA server is configured to register the received PGW identifier with an HSS, and is further configured to charge the UE that is using a network resource, which may include three steps: authentication (authentication): verifying whether a user can obtain access permission; authorization (authorization): authorizing the user to use an available service; and accounting (accounting): recording that the user uses the network resource. In an authentication and authorization procedure, the AAA server is further configured to: request and obtain the corresponding user subscription data from the HSS, and execute the corresponding authentication and authorization procedure based on the user subscription data. In addition, the AAA server may further include an AAA proxy, and the AAA proxy may replace the AAA server and perform corresponding operations.

The HSS is configured to: store the user subscription data corresponding to the terminal device, and transmit the user subscription data through an SWx interface.

In some possible embodiments, the AAA server and the HSS server may be separately deployed, and the AAA server and the HSS server are independent of each other. Alternatively, the AAA server and the HSS server may be co-located in one network device. This is not limited in embodiments of this application.

A policy and charging rules function (policy and charging rules function, PCRF) unit is configured to provide a corresponding policy and charging rule for the communication service.

In this application, for ease of understanding and description, the description of "network element" is omitted in some descriptions. For example, an HSS network element is referred to as an HSS for short. In this case, the "HSS" needs to be understood as an HSS network element or an HSS entity. Same or similar cases are not described below. It should be noted that the foregoing "network element" may also be referred to as an entity, a device, an apparatus, a module, or the like. This is not specifically limited in this application herein.

It should be noted that a name of each network element included in FIG. 1 is merely a name, and the name does not limit a function of the network element. In the 5G network and another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described below.

It should be noted that the network elements in FIG. 1 do not necessarily exist at the same time, and network elements that are required may be determined based on a requirement. A connection relationship between the network elements in FIG. 1 is not uniquely determined, and may be adjusted based on a requirement.

It may be understood that the foregoing network element or function may be a network element in a hardware device, may be a software function running on dedicated hardware, or may be a virtualized function instantiated on a platform (for example, a cloud platform).

However, with development of the wireless broadband technology, the network side may communicate with the terminal device based on the EPC, or may communicate with the terminal device based on a 5GC. In a scenario in which a terminal device accesses the core network based on the non-3GPP network, when the following two cases occur, the network side triggers the authentication and authorization procedure for the terminal device.

Case 1: The terminal device is initially attached. In this case, the network side triggers the authentication and authorization procedure for the terminal device, and the procedure may be executed by the foregoing ePDG, the foregoing AAA proxy/AAA server, and the foregoing HSS/a UDM/a home location register (home location register, HLR). Authentication and authorization include authentication algorithm negotiation, authentication data generation, and bidirectional authentication. In a bidirectional authentication process, the ePDG sends a DER command (Diameter-EAP-Request Command) to the AAA server. After receiving the DER command, the AAA server may obtain the user subscription data from the HSS, and determine, based on the user subscription data, whether the terminal device is authorized. If the authorization succeeds, the AAA server returns a DEA command (Diameter-EAP-Answer Command) to the ePDG, and then the ePDG performs an authorization procedure for the terminal device based on the DEA command.

Case 2: After the terminal device is initially attached, the user subscription data corresponding to the terminal device changes. In this case, the network side triggers a re-authorization procedure for the terminal device. In the re-authorization procedure, the ePDG sends an authentication and authorization request (diameter-AA-request, AAR) command to the AAA server. After receiving the authentication and authorization request command, the AAA server may obtain changed user subscription data from the HSS/a UDM, and then send the AAA command to the ePDG. The ePDG performs an authorization procedure for the terminal device based on the AAA command. However, the AAA command cannot reflect core network type restriction information. Consequently, after the core network type restriction information in the user subscription data changes, the network side cannot update a change of the information. In this way, the ePDG may subsequently select a network element device that does not meet the core network type restriction information, to establish a session with the terminal device, and the terminal device fails to establish the session. The core network type restriction information is mobility access restriction information. Candidate network element devices not only include the PGW used for the EPC, but may also include an SMF network element used for the 5GC, or even a co-located network element of the 5GC and the PGW.

In view of this, embodiments of this application provide a communication method, apparatus, and system, to adjust a current re-authorization procedure, so that an ePDG can obtain core network type restriction information and/or information about an interworking indicator in a process of re-authorization for a terminal device, to ensure that the ePDG can subsequently correctly select a corresponding network element device to establish a session with the UE, and further establish a PDN connection corresponding to the UE.

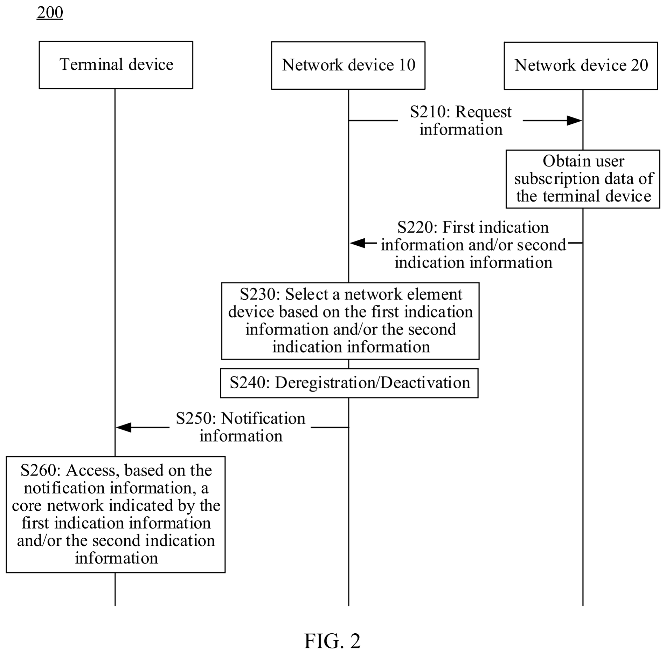

FIG. 2 is a block diagram of a procedure of a communication method 200 according to an embodiment of this application.

Refer to FIG. 2. A network device 10 in the communication method 200 may be an ePDG, or may be a related network device that can replace a function of an ePDG. A network device 20 in the communication method 200 may be an AAA server, or may be a related network device that can replace a function of an AAA server. Certainly, the AAA server may also use an AAA proxy to assist the AAA server in performing a corresponding procedure.

It should be understood that the communication method 200 may belong to a re-authorization procedure for a terminal device on a network side.

The following describes in detail a procedure of steps performed by the network device 10 in the communication method 200.

S210: Send request information to the network device 20, where the request information indicates to perform the re-authorization procedure for the terminal device, and the terminal device accesses a core network by using a non-3GPP access technology.

In some possible embodiments, an example in which the network device 20 is the AAA server is used. In a scenario in which the AAA proxy is deployed, a transmission path of the request information in S210 may be: first transmitting the request information to the AAA proxy, and then transmitting the request information from the AAA proxy to the AAA server.

In some possible embodiments, the request information may be the AAR command sent by the ePDG to the AAA server in the re-authorization procedure for the terminal device in the foregoing embodiment.

S220: Receive first indication information and/or second indication information from the network device 20, where the first indication information indicates a core network type that supports access of the terminal device, and the second indication information indicates whether data interworking between different types of core networks needs to be performed.

In some possible embodiments, the first indication information and the second indication information may be carried by one piece of answer information sent by the network device, or may be carried by two pieces of answer information sent by the network device. The answer message may be the foregoing AAA command.

In some possible embodiments, the answer information may be determined by the network device 20 based on user subscription data of the terminal device. The user subscription data includes core network type restriction information and/or an interworking identifier, and then the network device 20 may determine the first indication information and/or the second indication information based on the core network type restriction information and/or the interworking identifier, to determine the answer information. The network device may obtain the user subscription data of the terminal device from an HSS or a UDM.

In some possible embodiments, the first indication information may be the core network type restriction information, and is also referred to as core network restriction information. The core network type restriction information may be an enumerated value. The enumerated value includes: an EPC, representing that the terminal device is supported in accessing the EPC; a 5GC, representing that the terminal device is supported in accessing the 5GC; and an EPC & a 5GC, representing that the terminal device is supported in accessing both the EPC and the 5GC, where "support both" means that the terminal device is supported in accessing the EPC and the terminal device is also supported in accessing the 5GC. Certainly, the first indication information may alternatively be implicit information that can reflect a meaning of the core network type restriction information.

In some possible embodiments, the core network type restriction information may be carried by the AAA command, and the AAA command includes an indicator bit for the core network type restriction information. If data subscribed to by the terminal device includes the core network type restriction information, authorization answer information is to include the indicator bit that indicates a restriction on a type of a core network that the terminal device accesses.

In some possible embodiments, the core network type restriction information may be further represented by data of an unsigned data type, and includes a mask bit that indicates a core network type that is not allowed to be used by a terminal device as specified. For example, "0" and "1" may represent a meaning of the core network type restriction information. "0" indicates that the mask bit is discarded, to indicate that the type of the core network that the terminal device can access is not restricted. "1" indicates that the terminal device is not allowed to access the 5GC.

It should be understood that, it is considered that when the core network type restriction information is that accessing both the EPC and the 5GC is supported, data interworking between the EPC and the 5GC may be needed. Therefore, the answer information further needs to include the second indication information, so that the ePDG can determine whether a network element device that supports the data interworking between the EPC and the 5GC needs to be selected, and then establish a connection to the network element device.

In some possible embodiments, the second indication information may be the interworking indicator. The interworking indicator may be an enumerated type, representing whether an APN corresponding to the interworking indicator subscribes to the data interworking between the EPC and the 5GC, and a Boolean value represents a meaning of the interworking indicator. "0" indicates that the data interworking is not subscribed to; "1" indicates that the data interworking is subscribed to. When the interworking indicator does not exist on the network side, a value corresponding to a reserved bit for the interworking indicator is "0", indicating that the data interworking cannot be subscribed to. Certainly, the second indication information may alternatively be implicit information that can reflect the meaning of the interworking indicator.

In some possible embodiments, the first indication information and the second indication information may alternatively be represented only by the core network type restriction information. The core network type restriction information includes a 5GC bit and a data interworking indicator bit, and does not restrict accessibility of the EPC. The 5GC bit indicates whether the terminal device is allowed to access the 5GC, and the data interworking indicator bit indicates whether the data interworking between different types of core networks needs to be performed. For example, the network device is the ePDG. For a terminal device that supports an N1 mode, whose user subscription data does not restrict a type of a core network that the terminal device accesses, and that is connected to the 5GC, the ePDG may select a co-located network element including an SMF network element and a PGW-C for a PDN connection moving to the 5GC. The N1 mode supported by the UE is an operation mode in 5GNR, and is also referred to as a non-standalone mode. In addition, if the core network type restriction information is changed, due to a change of non-3GPP user subscription data, to forbidding the terminal device to connect to a currently accessed core network, the ePDG may trigger a detach procedure, for example, disconnect from a currently connected network element device.

It should be understood that the first indication information and the second indication information belong to mobility access restriction information, and represent a restriction condition that needs to be met when the terminal device accesses the core network.

S230: Select a network element device based on the first indication information and/or the second indication information, where the network element device is configured to establish a connection to the terminal device.

In some possible embodiments, when the core network type indicated by the first indication information is accessing the EPC, a PGW network element is selected; when the core network type indicated by the first indication information is the 5GC, the SMF network element is selected; when the core network type indicated by the first indication information is the EPC and the 5GC, an EPC network element, a PGW network element, or a co-located network element is selected; when the second indication information indicates that the data interworking between different types of core networks needs to be performed, a co-located network element is selected; when the core network type indicated by the first indication information is the 5GC, and the second indication information indicates that the data interworking between different types of core networks needs to be performed, a co-located network element including the SMF network element and the PGW-C is selected; when the core network type indicated by the first indication information is the EPC and the 5GC, and the second indication information indicates that the data interworking between different types of core networks needs to be performed, a co-located network element is selected; or when the core network type indicated by the first indication information is the EPC and the 5GC, and the second indication information indicates that the data interworking between different types of core networks does not need to be performed, the SMF network element, a PGW network element, or a co-located network element is selected. The co-located network element is a network element in which the SMF network element and the PGW-C network element are co-located.

It should be understood that the PGW network element and the SMF network element are session management network elements.

The foregoing embodiment includes some special cases. For example, when the second indication information indicates that the data interworking between different types of core networks needs to be performed, the co-located network element is selected. In this case, since the second indication information indicates that the data interworking between different types of core networks needs to be performed, it means that the terminal device currently needs to be supported in accessing both the EPC and the 5GC. In this case, the network device 20 can only send the second indication information or the sent answer information only includes the second indication information, to indicate the network device 10 to accurately select a network element. Therefore, the network device 20 may not send the first indication information, or the sent answer information may not include the first indication information. Correspondingly, when the first indication information indicates that the core network type that supports access of the terminal device is only the EPC or the 5GC, it means that the data interworking between different types of core networks does not need to be performed currently. In this case, the network device 20 can only send the first indication information or the sent answer information only includes the first indication information, to indicate the network device 10 to accurately select a network element. Therefore, the network device 20 may send only the first indication information, or the sent answer information may not include the second indication information.

Certainly, even if the second indication information indicates that the data interworking between different types of core networks needs to be performed, the network device 20 may send the first indication information, or the sent answer information may include the first indication information, so that after the network device 10 receives the answer information, the network device 10 checks whether the first indication information or the second indication information is accurate. If meanings expressed by the first indication information and the second indication information conflict with each other, for example, the core network type indicated by the first indication information is the EPC, and the second indication information indicates that the data interworking between different types of core networks needs to be performed, it indicates that the answer information is incorrect. Therefore, error reporting information may be sent to the network device 20, to indicate the network device 20 to resend the answer information or the corresponding indication information after an error correction operation is performed. Alternatively, in a process of determining the answer information or the corresponding indication information, the network device 20 may directly check the first indication information and the second indication information. If meanings expressed by the first indication information and the second indication information conflict with each other, the network device 20 directly performs an error correction operation to redetermine the answer information.

In some possible embodiments, there may be a plurality of network element devices that meet the first indication information and/or the second indication information. These network element devices may be referred to as candidate network elements. The candidate network elements may include a plurality of PGW network elements, a plurality of SMF network elements, and a plurality of co-located network elements. Therefore, a network element device that meets a condition may be selected from the plurality of candidate network element devices based on a mobility-related parameter of the terminal device.

In some possible embodiments, the ePDG is used as an example. After obtaining the first indication information and/or the second indication information, the ePDG may first obtain a core network to which a network element device currently connected to the ePDG belongs, determine a core network type, and then determine whether the core network type belongs to the core network type indicated by the first indication information and/or the second indication information. If the core network type belongs to the core network type indicated by the first indication information and/or the second indication information, the ePDG may choose to continue keeping a connection to the currently connected network element device, and does not perform an operation of switching a network element device. If the core network type does not belong to the core network type indicated by the first indication information and/or the second indication information, the ePDG needs to select a new network element device from the candidate network elements that meet the first indication information and/or the second indication information, and switch to and establish a connection to the network element device.

In some possible embodiments, the ePDG is used as an example. After obtaining the first indication information and/or the second indication information, the ePDG may further obtain the core network type restriction information and/or the interworking indicator included in the original user subscription data. For example, the ePDG may request to obtain the original user subscription data from the AAA server, and then, determine, based on the core network type restriction information and/or the interworking indicator included in the original user subscription data, whether the core network type restriction information and/or the interworking indicator for the terminal device remain unchanged after the user subscription data changes. If the core network type restriction information and/or the interworking indicator remain unchanged, the ePDG may choose to continue keeping a connection to a currently connected network element device, and does not perform an operation of switching a network element device. If the core network type restriction information and/or the interworking indicator change/changes, the ePDG needs to select a new network element device from the candidate network elements that meet the first indication information and/or the second indication information, and switch to and establish a connection to the network element device.

It can be learned that, regardless of whether the network element device currently connected to the network device 10 meets the restriction condition indicated by the first indication information and/or the second indication information, the network device 10 needs to select a network element device, indicating that a selection result is that the network element device does not need to be switched. Correspondingly, when the ePDG switches the network element device, it means that the network element device currently connected to the ePDG does not meet the restriction condition indicated by the first indication information and/or the second indication information, and therefore, a network element device that meets the restriction condition needs to be selected to establish a connection.

In some possible embodiments, the network element device may establish the connection to the terminal device in the following two manners: The network device 10 is used as an intermediate node to establish connections, to be specific, the network device 10 establishes a connection to the selected network element device, and the network device 10 further establishes a connection to the terminal device, to establish the connection between the network element device and the terminal device; or the network device 10 may send the indication information and a corresponding communication parameter to the selected network element device, so that the network element device can directly establish the connection to the terminal device.

It should be understood that the connection established by the network element device to the terminal device is a part of a PDN connection corresponding to the terminal device.

According to the foregoing technical solution, after the core network type restriction information and/or the interworking indicator in the user subscription data corresponding to the terminal device change/changes, the ePDG can obtain, from explicit or implicit information, changed core network type restriction information and/or a changed interworking indicator in user subscription data, to avoid a case in which the network side cannot update a change of the information when the core network type restriction information and/or the interworking indicator change/changes, so as to avoid communication exception caused by a case in which the ePDG selects an incorrect network element device to establish the connection to the terminal device.

It should be understood that the communication method 200 is some steps in the re-authorization procedure performed for the terminal device. For ease of understanding, the following describes all steps in the re-authorization procedure for the terminal device by using an example in which the network device 10 is the ePDG and the network device 20 is the AAA server.

First, when the user subscription data registered by the terminal device on the network side changes, the HSS sends a push subscription data request (push profile request) to the AAA server.

Then, the AAA server sends a first re-authorization request command to the ePDG based on the push subscription data request, where the command may be a re-auth-request command, and the command is used to trigger the re-authorization procedure for the terminal device.

Then, after receiving the first re-authorization request command, the ePDG sends a first re-authorization answer command to the AAA server, where the command may be a re-auth-answer command. In addition, the ePDG further sends a second re-authorization request command to the AAA server, where the command may be the foregoing request information.

It should be understood that the foregoing three steps are merely an example, and the network side may alternatively trigger the re-authorization procedure in another manner. When the re-authorization procedure is triggered in another manner, the communication method provided in this embodiment of this application is still applicable.

Then, the AAA server performs signaling exchange with the HSS or the UDM to obtain the changed user subscription data, where the user subscription data includes the core network type restriction information and/or the interworking indicator, and then sends a second re-authorization answer command to the ePDG, where the command may include the core network type restriction information and/or the interworking indicator. However, in this embodiment of this application, the command may carry the first indication information and/or the second indication information.

Finally, the ePDG determines, based on the first indication information and/or the second indication information, whether a corresponding network element device needs to be selected, and uses the network element device to establish a connection to the terminal device. If the selection needs to be performed, a corresponding network element device is selected from the core network indicated by the first indication information and/or the core network indicated by the second indication information, to establish the connection.

In some possible embodiments, it is considered that after the core network type restriction information and/or the interworking indicator in the user subscription data changes, the terminal device cannot perform a communication connection with the network side based on an original session, and this means that the original session between the terminal device and the network side and original registration information registered with the network side are invalid. Therefore, the network device 10 may further perform the following operations.

S240: Trigger a deregistration procedure for the terminal device, or trigger a deactivation procedure for the session corresponding to the terminal device.

The deregistration procedure is a procedure of deleting subscription user registration management (registration management, RM) context and releasing the session corresponding to the terminal device. The deactivation procedure is a procedure of releasing the session corresponding to the terminal device. It can be learned that the foregoing deregistration procedure includes the foregoing deactivation procedure, in other words, the deactivation procedure is also performed in the deregistration procedure. Whether the deregistration procedure for the terminal device needs to be performed may be determined based on storage space and/or current workload of the network side. If the storage space of the network side is abundant and/or the current workload is large, only the deactivation procedure for the terminal device may be triggered.

It should be understood that S240 and S230 are mutually parallel actions.

In some possible embodiments, when the network device 10 determines that the currently connected network element device does not meet the restriction condition indicated by the first indication information and/or the second indication information, for example, when the core network type indicated by the first indication information is the EPC, the network device 10 determines that the currently connected network element device is the SMF network element, and it indicates that the network element device currently connected to the network device 10 does not meet the first indication information, the network device 10 is to establish a connection to the PGW network element; or when the second indication information indicates that the data interworking between different types of core networks needs to be performed, the network device 10 determines that the currently connected network element device is only the SMF network element or the PGW network element, and it indicates that the network element device currently connected to the network device 10 does not meet the second indication information, the network device 10 is to establish a connection to the foregoing co-located network element. In these scenarios, the network device 10 may first perform the deregistration procedure for a terminal device corresponding to the network element device, is also disconnected from the network element device in the deregistration procedure, and then selects a new network element device based on the first indication information and/or the second indication information to establish a connection to the terminal device.

In some possible embodiments, when the network device 10 determines that the currently connected network element device does not meet the restriction condition indicated by the first indication information and/or the second indication information, the network device 10 may first select a new network element device based on the first indication information and/or the second indication information, switch to and establish a connection to the new network element device, and then perform the deregistration procedure for the terminal device.

According to the foregoing technical solution, after it is determined that the core network type restriction information and/or the interworking indicator in the user subscription data change/changes, a corresponding deregistration or deactivation operation is performed for the terminal device, and a storage resource and a communication resource on the network side are released, to help improve utilization of the storage resource and the communication resource on the network side.

In some possible embodiments, after the network device 10 performs S230, the network side can establish a PDN connection to the network device. However, these procedures only ensure that each network device on the network side can complete preparation work of providing a corresponding communication service for the terminal device. If the terminal device cannot obtain corresponding change information in a timely manner, the terminal device may communicate with the network side in an incorrect access manner, and consequently, the communication is rejected by the network side. Therefore, the network device 10 may further perform the following operations.

S250: Send notification information to the terminal device, where the notification information indicates that the terminal device is capable of accessing the core network indicated by the first indication information and/or the core network indicated by the second indication information.

In some possible embodiments, because there is a corresponding constraint relationship between the first indication information and the second indication information, usually, the notification information may also only indicate that the terminal device can access the core network indicated by the first indication information or the core network indicated by the second indication information. For example, when the second indication information is that the data interworking between different types of core networks needs to be performed, the first indication information definitely supports the terminal device in accessing both the EPC and the 5GC when no exception occurs. In this case, the notification information only needs to reflect corresponding content of the second indication information. When the second indication information is that the data interworking between different types of core networks does not need to be performed, the first indication information may support the terminal device in accessing the EPC and/or the 5GC when no exception occurs. In this case, the notification information only needs to reflect corresponding content of the first indication information.

In some possible embodiments, S250 may be performed in a process of updating the user subscription data, or may be performed in the foregoing process of deregistration or deactivation.

In some possible embodiments, the notification information may be a cause value based on an IKEv2 protocol, and the cause value may indicate the core network type restriction information and/or the interworking indicator.

It should be understood that, after receiving the notification information, the terminal device may determine a type of a core network that can be currently accessed and/or whether to subscribe to a function of the data interworking between the EPC and the 5GC, to actively adjust a corresponding network access manner.

According to the foregoing technical solution, the terminal device can determine whether the core network type restriction information and/or the interworking identifier in the user subscription data change/changes, and can actively adjust the corresponding network access manner, to ensure that a communication connection requested by the terminal device from the network side is not rejected by the network side.

The following describes in detail a procedure of steps performed by the network device 20 in the communication method 200.

S210: Receive the request information sent by the network device 10, where the request information indicates to perform the re-authorization procedure for the terminal device, and the terminal device accesses the core network by using the non-3rd generation partnership project non-3GPP access technology.

S220: Send the first indication information and/or the second indication information to the network device 10, where the first indication information indicates the core network type that supports the access of the terminal device, the second indication information indicates whether the data interworking between different types of core networks needs to be performed, and the first indication information and/or the second indication information are/is a basis for the network device 10 to select the network element device, where the network element device is configured to establish the connection to the terminal device.

In some possible embodiments, the first indication information and/or the second indication information may be carried by the AAA command in the foregoing embodiment.

In some possible embodiments, before S220, the network device 20 may further obtain the user subscription data of the terminal device based on the request information. The user subscription data is updated user subscription data, including the core network type restriction information and/or the interworking identifier.

In some possible embodiments, the network device 20 may obtain the user subscription data of the terminal device from the HSS or the UDM.

In some possible embodiments, the network device 20 may determine, based on the obtained user subscription data, the first indication information and/or the second indication information, or determine the answer information that carries the first indication information and/or the second indication information.

It should be understood that content of S210 and S220 performed by the network device 20 corresponds to content of S210 and S220 performed by the network device 10. Therefore, for embodiments corresponding to S210 and S220 performed by the network device 20, refer to the foregoing corresponding embodiments. Details are not described herein again.

According to the foregoing technical solution, the network device 20 sends the first indication information and/or the second indication information to the network device 10, so that the network device 10 can obtain the changed core network type restriction information and/or the changed interworking indicator in the user subscription data, to avoid a case in which the network side cannot update the change of the information when the core network type restriction information and/or the interworking indicator change/changes, so as to avoid communication exception caused by a case in which the network device 10 selects an incorrect network element device to establish a connection to the terminal device.

In some possible embodiments, after the network device 20 triggers the deregistration or deactivation procedure for the terminal device, the network device 10 may also participate in the deregistration or deactivation procedure for the terminal device.

The following describes in detail a procedure of steps performed by the terminal device in the communication method 200.

S250: Receive the notification information from the network device 10, where the notification information indicates the terminal device to access the core network indicated by the first indication information and/or the core network indicated by the second indication information, the first indication information indicates the core network type that supports the access of the terminal device, and the second indication information indicates whether the data interworking between different types of core networks needs to be performed.

It should be understood that content of S250 performed by the terminal device corresponds to content of S250 performed by the network device 10. Therefore, for an embodiment corresponding to S250 performed by the terminal device, refer to the foregoing corresponding embodiment. Details are not described herein again.

S260: Access, based on the notification information, the core network indicated by the first indication information and/or the core network indicated by the second indication information.

According to the foregoing technical solution, the terminal device can determine, based on the notification information, whether the core network type restriction information and/or the interworking identifier in the user subscription data change/changes, and can actively adjust the corresponding network access manner, to ensure that the communication connection requested by the terminal device from the network side is not rejected by the network side.

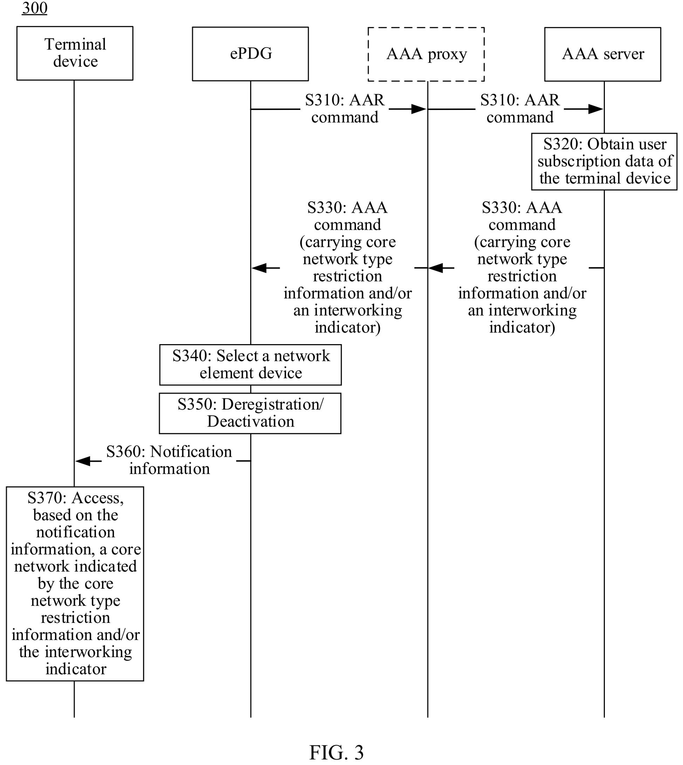

For ease of understanding, with reference to FIG. 3, the following describes in detail a signaling exchange procedure among the ePDG, the AAA server, and the terminal device by using an example in which the ePDG is the foregoing network device 10 and the AAA server is the foregoing network device 20.

FIG. 3 is a block diagram of a procedure of a communication method 300 according to an embodiment of this application.

S310: An ePDG sends an AAR command to an AAA server.

When the AAA server is correspondingly provided with an AAA proxy, the ePDG may send the AAR command to the AAA proxy, and then the AAA proxy sends the AAR command to the AAA server.

S320: The AAA server receives the AAR command, and obtains user subscription information from an HSS or a UDM based on the AAR command.

S330: The AAA server sends an AAA command to the ePDG, where the AAA command carries core network type restriction information and/or an interworking indicator.

When the AAA server is correspondingly provided with the AAA proxy, the AAA server may send the AAA command to the AAA proxy, and then the AAA proxy sends the AAA command to the ePDG.

S340: The ePDG selects, based on the AAA command, a network element device that meets a restriction condition of the core network type restriction information and/or the interworking indicator, where the network element device is configured to establish a connection to a terminal device.

S350: If it is determined that the core network type restriction information and/or the interworking indicator are/is different from that before user subscription data changes, or if a network element device currently connected to the ePDG does not meet the restriction condition of the core network type restriction information and/or the interworking indicator, trigger a deregistration procedure or a deactivation procedure for the terminal device.

S360: The ePDG sends notification information to the terminal device, where the notification information may be a cause value based on IKEv2 and indicate a change of the core network type restriction information and/or the interworking indicator, for example, indicate a change of the core network type restriction information and/or the interworking indicator before and after the user subscription data is updated, or indicate changed core network type restriction information and/or a changed interworking indicator.

S370: The terminal device accesses, based on the notification information, a core network indicated by the core network type restriction information and/or a core network indicated by the interworking indicator.

It should be understood that, before performing S310, each network device on the network side may further perform a corresponding step of updating the user subscription data corresponding to the terminal device.

S340 and S350 are mutually parallel steps. In addition, S310 to S370 may be an example implementation of S210 to S260 in the communication method 200.

In addition, based on signaling exchange logic of the communication method 200, an embodiment of this application further provides a communication method 400.

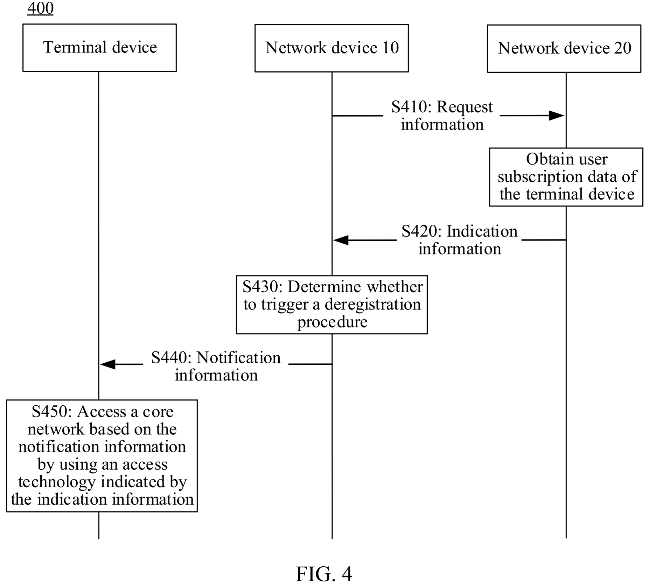

FIG. 4 is a block diagram of a procedure of the communication method 400 according to an embodiment of this application.

Refer to FIG. 4. A network device 10 in the communication method 400 may be an ePDG, or may be a related network device that can replace a function of an ePDG. A network device 20 in the communication method 400 may be an AAA server, or may be a related network device that can replace a function of an AAA server. Certainly, the AAA server may also use an AAA proxy to assist the AAA server in performing a corresponding procedure.

It should be understood that the communication method 400 may belong to a re-authorization procedure for a terminal device on a network side.

The following describes in detail a procedure of steps performed by the network device 10 in the communication method 400.

S410: Send request information to the network device 20, where the request information indicates to perform the re-authorization procedure for the terminal device.

It can be learned from FIG. 3 that content of S410 in the communication method 300 is basically the same as content of S210. Therefore, for an expanded embodiment of S410, refer to the foregoing embodiment corresponding to S210. Details are not described herein again. It can be learned from this that subsequent steps of S410 may also be steps following S210 above.

S420: Receive indication information from the network device 20, where the indication information indicates an access technology type that supports the terminal device in accessing a core network.

In some possible embodiments, the indication information may be RAT restriction (RAT restriction) information, or the indication information may be implicit information that can reflect RAT restriction information. For example, the RAT restriction information may include: allowing the terminal device to access the core network by using a non-3GPP access technology, allowing the terminal device to access the core network by using a 3GPP access technology, allowing the terminal device to access the core network by using a non-3GPP or 3GPP access technology, and forbidding the terminal device to access the core network by using a non-3GPP or 3GPP access technology.

In some possible embodiments, the indication information in the communication method 300 may also be carried by the foregoing AAA command. Therefore, the AAA command may include one or more of the core network type restriction information, the interworking indicator, and the RAT restriction information.

S430: Determine, based on the indication information, whether to trigger a deregistration procedure for the terminal device. When an access technology type used by the terminal device to access the core network does not belong to the access technology type indicated by the indication information, the deregistration procedure for the terminal device is triggered.

For example, the terminal device originally accesses the core network based on the non-3GPP access technology. However, because user subscription data changes, the RAT restriction information is changed to allowing the terminal device to access the core network by using the 3GPP access technology or forbidding the terminal device to access the core network by using the non-3GPP or 3GPP access technology. Therefore, the access technology used by the terminal device to access the core network needs to be changed to the 3GPP access technology for accessing the core network. Consequently, registration information that is about the terminal device and that is registered on the network side becomes invalid after the user subscription data is updated. Accordingly, the registration information is cleared in the deregistration procedure triggered in S430, so that a corresponding storage resource can be released.

According to the foregoing technical solution, after it is determined that the RAT restriction information in the user subscription data changes, a corresponding deregistration operation is performed for the terminal device, and the storage resource on the network side is released, to help improve utilization of the storage resource on the network side.

In some possible embodiments, the network device 10 may further perform the following operations.

S440: Send notification information to the terminal device, where the notification information indicates that the terminal device is capable of accessing the core network by using an access technology indicated by the indication information.

It should be understood that, after receiving the notification information, the terminal device may determine the access technology that needs to be used to currently access the core network, and actively adjust a corresponding network access manner.

In some possible embodiments, S440 may be performed in a process of updating the user subscription data, or may be performed in the foregoing deregistration process.

In some possible embodiments, the notification information may alternatively be a cause value based on an IKEv2 protocol, and the cause value may indicate the RAT restriction information.

According to the foregoing technical solution, when the network side updates the RAT restriction information of the user subscription data, the terminal device can obtain updated RAT restriction information, to prevent the terminal device from repeatedly requesting to access the core network by using the forbidden non-3GPP access technology or 3GPP access technology.

The following describes in detail a procedure of steps performed by the network device 20 in the communication method 400.

S410: Receive the request information from the network device 10, where the request information indicates to perform the re-authorization procedure for the terminal device.

S420: Send the indication information to the network device 10, where the indication information indicates the access technology type that is supported by the terminal device, and the indication information is a basis for the network device 10 to determine whether to trigger the deregistration procedure for the terminal device.

In some possible embodiments, similar to the communication method 200, before S420, the network device 20 may be further obtain the user subscription data of the terminal device based on the request information. The network device 20 may obtain the user subscription data of the terminal device from an HSS or a UDM, where the user subscription data includes the RAT restriction information. Then, the network device 20 may determine the indication information based on the obtained user subscription data, where the indication information may be carried by the AAA command described in the foregoing embodiment.

It should be understood that content of S410 and S420 performed by the network device 20 corresponds to content of S410 and S420 performed by the network device 10. Therefore, for embodiments corresponding to S410 and S420 performed by the network device 20, refer to the foregoing corresponding embodiments. Details are not described herein again.

According to the foregoing technical solution, the network device 20 sends the indication information to the network device 10 to indicate the RAT restriction information in the user subscription data, so that after receiving the indication information, the network device 10 can determine whether the RAT restriction information also changes after the user subscription data changes, and determine, based on this, whether the corresponding deregistration operation needs to be performed for the terminal device to release the storage resource on the network side, to help improve the utilization of the storage resource on the network side.

The following describes in detail a procedure of steps performed by the terminal device in the communication method 400.

S440: Receive the notification information from the network device 10, where the notification information indicates the terminal device to access the core network by using the access technology indicated by the indication information, and the indication information indicates the access technology type that supports the terminal device in accessing the core network.

It should be understood that content of S440 performed by the terminal device corresponds to content of S440 performed by the network device 10. Therefore, for an embodiment corresponding to S340 performed by the terminal device, refer to the foregoing corresponding embodiment. Details are not described herein again.

S450: Access the core network based on the notification information by using the access technology indicated by the indication information.

According to the foregoing technical solution, the terminal device can determine, based on the foregoing notification information, whether the RAT restriction information in the user subscription data changes, to actively adjust the corresponding network access manner, so as to prevent the terminal device from repeatedly requesting to access the core network by using a forbidden access technology.

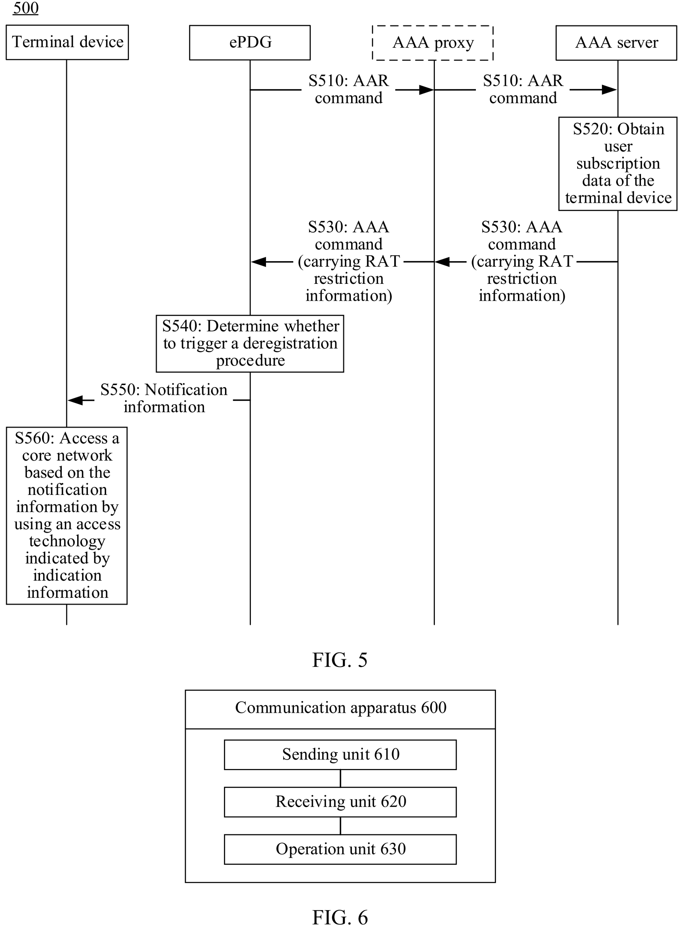

For ease of understanding, with reference to FIG. 5, the following describes in detail a signaling exchange procedure among the ePDG, the AAA server, and the terminal device by using an example in which the ePDG is the foregoing network device 10 and the AAA server is the foregoing network device 20.

FIG. 5 is a block diagram of a procedure of a communication method 500 according to an embodiment of this application.

S510: An ePDG sends the foregoing AAR command to an AAA server.

When the AAA server is correspondingly provided with an AAA proxy, the ePDG may send the AAR command to the AAA proxy, and then the AAA proxy sends the AAR command to the AAA server.

S520: The AAA server receives the AAR command, and obtains user subscription information from an HSS or a UDM based on the AAR command.

S530: The AAA server sends an AAA command to the ePDG, where the AAA command carries RAT restriction information.

When the AAA server is correspondingly provided with the AAA proxy, the AAA server may send the AAA command to the AAA proxy, and then the AAA proxy sends the AAA command to the ePDG.

S540: If an access technology type used by the terminal device to currently access a core network does not belong to an access technology type restricted by the RAT restriction information, trigger a deregistration procedure for the terminal device.

S550: The ePDG sends notification information to the terminal device, where the notification information may be a cause value based on IKEv2 and indicates a change of the RAT restriction information, for example, indicate the change of the RAT restriction information before and after user subscription data is updated, or indicate changed RAT restriction information.

S560: The terminal device accesses the core network based on the notification information by using an access technology indicated by indication information.

It should be understood that, before performing S510, each network device on the network side may further perform a corresponding step of updating the user subscription data corresponding to the terminal device.

S510 to S560 may be an implementation of S410 to S450 in the communication method 400.

Embodiments of this application further provide an apparatus configured to implement any one of the foregoing methods. For example, a communication apparatus is provided. The apparatus may be a submodule integrated into a terminal device, and includes a unit (or a means) configured to implement any one of the foregoing communication methods.

FIG. 6 shows a block diagram of a communication apparatus 600 according to an embodiment of this application. The communication apparatus 600 may be carried on the foregoing network device.

The communication apparatus 600 may be carried on a network device 10. Refer to FIG. 6. The communication apparatus 600 includes:
a sending unit 610, configured to send request information to a network device 20, where the request information indicates to perform a re-authorization procedure for a terminal device, and the terminal device accesses a core network by using a non-3GPP access technology.
a receiving unit 620, configured to receive first indication information and/or second indication information from the network device 20, where the first indication information indicates a core network type that supports access of the terminal device, and the second indication information indicates whether data interworking between different types of core networks needs to be performed; and
an operation unit 630, configured to select a network element device based on the first indication information and/or the second indication information, where the network element device is configured to establish a connection to the terminal device.

In some possible embodiments, the operation unit 630 is specifically configured to: when the core network type indicated by the first indication information is accessing an EPC, select a PGW network element; when the core network type indicated by the first indication information is a 5GC, select an SMF network element; when the core network type indicated by the first indication information is an EPC and a 5GC, select an EPC network element, a PGW network element, or a co-located network element; when the second indication information indicates that the data interworking between different types of core networks needs to be performed, select a co-located network element; when the core network type indicated by the first indication information is a 5GC, and the second indication information indicates that the data interworking between different types of core networks needs to be performed, select a co-located network element including an SMF network element and a PGW-C; when the core network type indicated by the first indication information is an EPC and a 5GC, and the second indication information indicates that the data interworking between different types of core networks needs to be performed, select a co-located network element; or when the core network type indicated by the first indication information is an EPC and a 5GC, and the second indication information indicates that the data interworking between different types of core networks does not need to be performed, select an SMF network element, a PGW network element, or a co-located network element, where the co-located network element is a network element in which the SMF network element and a PGW-C network element are co-located.

In some possible embodiments, the operation unit 630 is further configured to trigger a deregistration procedure for the terminal device, or trigger a deactivation procedure for a session corresponding to the terminal device.

In some possible embodiments, the sending unit 610 is further configured to send notification information to the terminal device, where the notification information indicates the terminal device to access a core network indicated by the first indication information and/or a core network indicated by the second indication information.

In some possible embodiments, logical functional units of the communication apparatus 600 may be further configured to perform the following operations.

The sending unit 610 is configured to send the request information to the network device 20, where the request information indicates to perform the re-authorization procedure for the terminal device.

The receiving unit 620 is configured to receive the indication information from the network device 20, where the indication information indicates the access technology type that supports the terminal device in accessing the core network.

The operation unit 630 is configured to trigger the deregistration procedure for the terminal device when the access technology type used by the terminal device to access the core network does not belong to the access technology type indicated by the indication information.

In some possible embodiments, the sending unit 610 is further configured to send the notification information to the terminal device, where the notification information indicates the terminal device to access the core network by using an access technology indicated by the indication information.

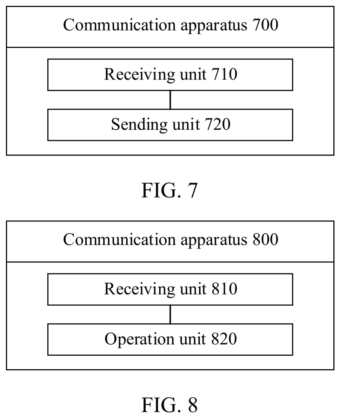

FIG. 7 shows a block diagram of a communication apparatus 700 according to an embodiment of this application.

The communication apparatus 700 may be carried on a network device 20. Refer to FIG. 7. The communication apparatus 700 includes:
a receiving unit 710, configured to receive request information from a network device 10, where the request information indicates to perform a re-authorization procedure for a terminal device, and the terminal device accesses a core network by using a non-3GPP access technology; and
a sending unit 720, configured to send first indication information and/or second indication information to the network device 10, where the first indication information indicates a core network type that supports access of the terminal device, the second indication information indicates whether data interworking between different types of core networks needs to be performed, and the first indication information and/or the second indication information are/is a basis for the network device to select a network element device, where the network element device is configured to establish a connection to the terminal device.

In some possible embodiments, logical functional units of the communication apparatus 700 may be further configured to perform the following operations.

The receiving unit 710 is configured to receive the request information from the network device 10, where the request information indicates to perform the re-authorization procedure for the terminal device.
a sending unit 720 is configured to send the indication information to the network device 10, where the indication information indicates an access technology type that is supported by the terminal device, and the indication information is a basis for the network device to determine whether to trigger the deregistration procedure for the terminal device.

FIG. 8 shows a block diagram of a communication apparatus 800 according to an embodiment of this application.

The communication apparatus 800 may be carried on the foregoing terminal device. Refer to FIG. 8. The communication apparatus 800 includes:
a receiving unit 810, configured to receive notification information #1 from a network device 10, where the notification information #1 indicates a terminal device to access a core network indicated by first indication information and/or a core network indicated by second indication information, the first indication information indicates a core network type that supports access of the terminal device, and the second indication information indicates whether data interworking between different types of core networks needs to be performed; and
an operation unit 820, configured to access, based on the notification information #1, the core network indicated by the first indication information and/or the core network indicated by the second indication information.

In some possible embodiments, logical functional units of the communication apparatus 800 may be further configured to perform the following operations.
the receiving unit 810 is configured to receive notification information #2 from the network device 10, where the notification information #2 indicates the terminal device to access the core network by using an access technology indicated by indication information, and the indication information indicates an access technology type that supports the terminal device in accessing the core network.

The operation unit 820 is configured to access the core network based on the notification information #2 by using the access technology indicated by the indication information.

In addition, an embodiment of this application further provides a communication system, the communication system includes a first network device and a second network device. The first network device and the second network device are configured to perform the communication method 200 and the communication method 400 in any one of the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending request information to a network device, wherein the request information indicates to perform a re-authorization procedure for a terminal device, and the terminal device accesses a core network by using a non-3rd generation partnership project non-3GPP access technology;
receiving first indication information and/or second indication information from the network device, wherein the first indication information indicates a core network type that supports access of the terminal device, and the second indication information indicates whether data interworking between different types of core networks needs to be performed; and
selecting a network element device based on the first indication information and/or the second indication information, wherein the network element device is configured to establish a connection to the terminal device.

2. The method according to claim 1, wherein the selecting a network element device based on the first indication information and/or the second indication information comprises:
when the core network type indicated by the first indication information is accessing an evolved packet core network EPC, selecting a packet data network gateway PGW network element;
when the core network type indicated by the first indication information is a 5G core network 5GC, selecting a session management function SMF network element;
when the core network type indicated by the first indication information is an EPC and a 5GC, selecting an EPC network element, a PGW network element, or a co-located network element comprising an SMF network element and a packet data network gateway control plane function PGW-C network element;
when the second indication information indicates that the data interworking between different types of core networks needs to be performed, selecting a co-located network element comprising an SMF network element and a PGW-C;
when the core network type indicated by the first indication information is a 5GC, and the second indication information indicates that the data interworking between different types of core networks needs to be performed, selecting a co-located network element comprising an SMF network element and a PGW-C;
when the core network type indicated by the first indication information is an EPC and a 5GC, and the second indication information indicates that the data interworking between different types of core networks needs to be performed, selecting a co-located network element comprising an SMF network element and a PGW-C; or
when the core network type indicated by the first indication information is an EPC and a 5GC, and the second indication information indicates that the data interworking between different types of core networks does not need to be performed, selecting an SMF network element, a PGW network element, or a co-located network element comprising an SMF network element and a PGW-C.

3. The method according to claim 1 or 2, wherein the method further comprises:
triggering a deregistration procedure for the terminal device, or triggering a deactivation procedure for a session corresponding to the terminal device.

4. The method according to any one of claims 1 to 3, wherein the method further comprises:
sending notification information to the terminal device, wherein the notification information indicates that the terminal device is capable of accessing a core network indicated by the first indication information and/or a core network indicated by the second indication information.

5. The method according to any one of claims 1 to 4, wherein the first indication information is core network restriction information, and the core network restriction information indicates whether the terminal device sets a core network type that is not allowed to be used; and the second indication information is an interworking indicator, and the interworking indicator indicates whether data interworking between an EPC and a 5GC is subscribed to.

6. The method according to claim 5, wherein the core network restriction information is that 5GC not allowed is not set, the interworking indicator is that the data interworking between an EPC and a 5GC is subscribed to, and the selecting a network element device based on the first indication information and/or the second indication information comprises:
selecting, based on that 5GC not allowed is not set and/or the data interworking between an EPC and a 5GC is subscribed to, the co-located network element comprising the SMF network element and the PGW-C.

7. A communication method, comprising:
sending request information to a network device, wherein the request information indicates to perform a re-authorization procedure for a terminal device;
receiving indication information from the network device, wherein the indication information indicates an access technology type that supports the terminal device in accessing a core network; and
triggering a deregistration procedure for the terminal device when an access technology type used by the terminal device to access the core network does not belong to the access technology type indicated by the indication information.

8. The method according to claim 7, wherein the method further comprises:
sending notification information to the terminal device, wherein the notification information indicates that the terminal device is capable of accessing a core network by using an access technology indicated by the indication information.

9. A communication method, comprising:
receiving request information from a network device, wherein the request information indicates to perform a re-authorization procedure for a terminal device, and the terminal device accesses a core network by using a non-3rd generation partnership project non-3GPP access technology; and
sending first indication information and/or second indication information to the network device, wherein the first indication information indicates a core network type that supports access of the terminal device, the second indication information indicates whether data interworking between different types of core networks needs to be performed, and the first indication information and/or the second indication information are/is a basis for the network device to select a network element device, wherein the network element device is configured to establish a connection to the terminal device.

10. The method according to claim 9, wherein when the core network type indicated by the first indication information is an evolved packet core network EPC, the network element device is a packet data network gateway PGW network element;
when the core network type indicated by the first indication information is a 5G core network 5GC, the network element device is a session management function SMF network element;
when the core network type indicated by the first indication information is an EPC and a 5GC, the network element device is an EPC network element, a PGW network element, or a co-located network element comprising an SMF network element and a packet data network gateway control plane function PGW-C network element;
when the second indication information indicates that the data interworking between different types of core networks needs to be performed, the network element device is a co-located network element comprising an SMF network element and a PGW-C network element;
when the core network type indicated by the first indication information is a 5GC, and the second indication information indicates that the data interworking between different types of core networks needs to be performed, the network element device is a co-located network element comprising an SMF network element and a PGW-C;
when the core network type indicated by the first indication information is an EPC and a 5GC, and the second indication information indicates that the data interworking between different types of core networks needs to be performed, the network element device is a co-located network element comprising an SMF network element and a PGW-C network element; or
when the core network type indicated by the first indication information is an EPC and a 5GC, and the second indication information indicates that the data interworking between different types of core networks does not need to be performed, the network element device is an SMF network element, a PGW network element, or a co-located network element comprising an SMF network element and a PGW-C network element.

11. A communication method, comprising:
receiving request information sent by a network device, wherein the request information indicates to perform a re-authorization procedure for a terminal device; and
sending indication information to the network device, wherein the indication information indicates an access technology type that is supported by the terminal device, and the indication information is a basis for the network device to determine whether to trigger a deregistration procedure for the terminal device.

12. A communication method, comprising:
receiving notification information from a network device, wherein the notification information indicates a terminal device to access a core network indicated by first indication information and/or a core network indicated by second indication information, the first indication information indicates a core network type that supports access of the terminal device, and the second indication information indicates whether data interworking between different types of core networks needs to be performed; and
accessing, based on the notification information, the core network indicated by the first indication information and/or the core network indicated by the second indication information.

13. A communication method, comprising:
receiving notification information from a network device, wherein the notification information indicates a terminal device to access a core network by using an access technology indicated by indication information, and the indication information indicates an access technology type that supports the terminal device in accessing the core network; and
accessing the core network based on the notification information by using the access technology indicated by the indication information.

14. A communication apparatus, comprising:
a sending unit, configured to send request information to a network device, wherein the request information indicates to perform a re-authorization procedure for a terminal device, and the terminal device accesses a core network by using a non-3rd generation partnership project non-3GPP access technology;
a receiving unit, configured to receive first indication information and/or second indication information from the network device, wherein the first indication information indicates a core network type that supports access of the terminal device, and the second indication information indicates whether data interworking between different types of core networks needs to be performed; and
an operation unit, configured to select a network element device based on the first indication information and/or the second indication information, wherein the network element device is configured to establish a connection to the terminal device.

15. The apparatus according to claim 14, wherein the operation unit is specifically configured to:
when the core network type indicated by the first indication information is an evolved packet core network EPC, select a packet data network gateway PGW network element;
when the core network type indicated by the first indication information is a 5G core network 5GC, select a session management function SMF network element;
when the core network type indicated by the first indication information is an EPC and a 5GC, select an EPC network element, a PGW network element, or a co-located network element comprising an SMF network element and a packet data network gateway control plane function PGW-C network element;
when the second indication information indicates that the data interworking between different types of core networks needs to be performed, select a co-located network element comprising an SMF network element and a PGW-C network element;
when the core network type indicated by the first indication information is a 5GC, and the second indication information indicates that the data interworking between different types of core networks needs to be performed, select a co-located network element comprising an SMF network element and a PGW-C;
when the core network type indicated by the first indication information is an EPC and a 5GC, and the second indication information indicates that the data interworking between different types of core networks needs to be performed, select a co-located network element comprising an SMF network element and a PGW-C network element; or
when the core network type indicated by the first indication information is an EPC and a 5GC, and the second indication information indicates that the data interworking between different types of core networks does not need to be performed, select an SMF network element, a PGW network element, or a co-located network element comprising an SMF network element and a PGW-C network element.

16. The apparatus according to claim 14 or 15, wherein the operation unit is further configured to:
trigger a deregistration procedure for the terminal device, or trigger a deactivation procedure for a session corresponding to the terminal device.

17. The apparatus according to any one of claims 14 to 16, wherein the sending unit is further configured to:
send notification information to the terminal device, wherein the notification information indicates the terminal device to access a core network indicated by the first indication information and/or a core network indicated by the second indication information.

18. The apparatus according to any one of claims 14 to 17, wherein the first indication information is core network restriction information, and the core network restriction information indicates whether the terminal device sets a core network type that is not allowed to be used; and the second indication information is an interworking indicator, and the interworking indicator indicates whether data interworking between an EPC and a 5GC is subscribed to.

19. The apparatus according to claim 18, wherein the core network restriction information is that 5GC not allowed is not set, the interworking indicator is that the data interworking between an EPC and a 5GC is subscribed to, and the operation unit is specifically configured to:
select, based on that 5GC not allowed is not set and/or the data interworking between an EPC and a 5GC is subscribed to, the co-located network element comprising the SMF network element and the PGW-C.

20. A communication apparatus, comprising:
a sending unit, configured to send request information to a network device, wherein the request information indicates to perform a re-authorization procedure for a terminal device;
a receiving unit, configured to receive indication information from the network device, wherein the indication information indicates an access technology type that supports the terminal device in accessing a core network; and
an operation unit, configured to trigger a deregistration procedure for the terminal device when an access technology type used by the terminal device to access the core network does not belong to the access technology type indicated by the indication information.

21. The apparatus according to claim 20, wherein the sending unit is further configured to:
send notification information to the terminal device, wherein the notification information indicates the terminal device to access the core network by using an access technology indicated by the indication information.

22. A communication apparatus, comprising:
a receiving unit, configured to receive request information from a network device, wherein the request information indicates to perform a re-authorization procedure for a terminal device, and the terminal device accesses a core network by using a non-3rd generation partnership project non-3GPP access technology; and
a sending unit, configured to send first indication information and/or second indication information to the network device, wherein the first indication information indicates a core network type that supports access of the terminal device, the second indication information indicates whether data interworking between different types of core networks needs to be performed, and the first indication information and/or the second indication information are/is a basis for the network device to select a network element device, wherein the network element device is configured to establish a connection to the terminal device.

23. The apparatus according to claim 22, wherein when the core network type indicated by the first indication information is an evolved packet core network EPC, the network element device is a packet data network gateway PGW network element;
when the core network type indicated by the first indication information is a 5G core network 5GC, the network element device is a session management function SMF network element;
when the core network type indicated by the first indication information is an EPC and a 5GC, the network element device is an EPC network element, a PGW network element, or a co-located network element comprising an SMF network element and a packet data network gateway control plane function PGW-C network element;
when the second indication information indicates that the data interworking between different types of core networks needs to be performed, the network element device is a co-located network element comprising an SMF network element and a PGW-C network element;
when the core network type indicated by the first indication information is a 5GC, and the second indication information indicates that the data interworking between different types of core networks needs to be performed, the network element device is a co-located network element comprising an SMF network element and a PGW-C;
when the core network type indicated by the first indication information is an EPC and a 5GC, and the second indication information indicates that the data interworking between different types of core networks needs to be performed, the network element device is a co-located network element comprising an SMF network element and a PGW-C network element; or
when the core network type indicated by the first indication information is an EPC and a 5GC, and the second indication information indicates that the data interworking between different types of core networks does not need to be performed, the network element device is an SMF network element, a PGW network element, or a co-located network element comprising an SMF network element and a PGW-C network element.

24. A communication apparatus, comprising:
a receiving unit, configured to receive request information from a network device, wherein the request information indicates to perform a re-authorization procedure for a terminal device; and
a sending unit, configured to send indication information to the network device, wherein the indication information indicates an access technology type that is supported by the terminal device, and the indication information is a basis for the network device to determine whether to trigger a deregistration procedure for the terminal device.

25. A communication apparatus, comprising:
a receiving unit, configured to receive notification information from a network device, wherein the notification information indicates a terminal device to access a core network indicated by first indication information and/or a core network indicated by second indication information, the first indication information indicates a core network type that supports access of the terminal device, and the second indication information indicates whether data interworking between different types of core networks needs to be performed; and
an operation unit, configured to access, based on the notification information, the core network indicated by the first indication information and/or the core network indicated by the second indication information.

26. A communication apparatus, comprising:
a receiving unit, configured to receive notification information from a network device, wherein the notification information indicates a terminal device to access a core network by using an access technology indicated by indication information, and the indication information indicates an access technology type that supports the terminal device in accessing the core network; and
an operation unit, configured to access the core network based on the notification information by using the access technology indicated by the indication information.

27. A communication apparatus, comprising:
a memory, configured to store computer instructions; and
a processor, configured to execute the computer instructions stored in the memory, to cause the apparatus to perform the method according to any one of claims 1 to 13.

28. A chip, comprising a processor, wherein the processor is configured to perform the method according to any one of claims 1 to 13.

29. A computer-readable storage medium, wherein the computer-readable storage medium stores computer instructions; and when the instructions are executed on a computer, the apparatus is caused to perform the method according to any one of claims 1 to 13.

30. A computer program product, wherein the computer program product comprises a computer program or instructions; and when the computer program or the instructions are executed by a computer, the apparatus is caused to perform the method according to any one of claims 1 to 13.

31. A communication system, comprising:
a first network device, configured to perform the method according to any one of claims 9 to 13; and
a second network device, configured to perform the method according to any one of claims 1 to 8.
